# EUROPÄISCHE PATENTSCHRIFT

(11) **EP 0 324 107 B1**
(45) Veröffentlichungstag und Bekanntmachung des Hinweises auf die Patenterteilung: **02.03.1994**
(21) Anmeldenummer: 88120411.9
(22) Anmeldetag: 07.12.1988
(51) Int. Cl.: H04N 9/04

(54) **Farbfernsehkamera**
Colour-television camera
Caméra de télévision couleur

(30) Priorität: 09.01.1988 DE 3800406
(43) Veröffentlichungstag der Anmeldung: 19.07.1989
(73) Patentinhaber: ROBERT BOSCH GMBH, 70442 Stuttgart (DE)
(72) Erfinder: Bock, Gerd, Dr., D-3200 Hildesheim (DE)
(74) Vertreter: Friedmann, Jürgen, Dr.-Ing.

(56) Entgegenhaltungen:
- US-A- 4 125 857
- PATENT ABSTRACTS OF JAPAN, Band 11, Nr. 23 (E-473)[2470], 22. Januar 1987;& JP-A-61 193 589 (HITACHI LTD) 28-08-1986
- PATENT ABSTRACTS OF JAPAN, Band 4, Nr. 181 (E-37)[663], 13. Dezember 1980;& JP-A-55 123 279 (OLYMPUS KOGAKU KOGYO K.K.) 22-09-1980
- PATENT ABSTRACTS OF JAPAN, Band 7, Nr. 65 (E-165)[1210], 18. März 1983; & JP-A-57 21871 (SONY K.K.) 25.12.1982

## Beschreibung

Die Erfindung geht aus von einer Farbfernsehkamera nach der Gattung des Hauptanspruchs.

Eine Kamera dieser Art ist aus JP-A-61 193 589 bekannt geworden.

Für die Übertragung von bewegten Bildern und Standbildern sind verschiedene Irrelevanz- und Redundanzreduktionsverfahren bekannt geworden, um den Bandbreitenbedarf gegenüber demjenigen beim Rundfunkfernsehen zu verringern. Für eine weitere Reduktion des Bandbreitenbedarfs, beispielsweise für das Schmalband-ISDN mit einer Bitrate von 64 kBit/s ist jedoch auch eine Informationsreduktion erforderlich, die in an sich bekannter Weise aus einer Verringerung der horizontalen, vertikalen und zeitlichen Auflösung bestehen kann.

Aufgabe der vorliegenden Erfindung ist es, eine Farbfernsehkamera vorzuschlagen, welche in vorteilhafter Weise an die Bedürfnisse einer Schmalbandbildübertragung angepaßt ist.

Die Farbfernsehkamera mit den kennzeichnenden Merkmalen des Hauptanspruchs hat den Vorteil, daß in einfacher Weise ein zeitsequentielles Signal abgeleitet wird. Eine Weiterbildung der Erfindung, nach welcher jeweils mehrere Bildpunkte des Halbeiterbildsensors zu einem effektiven Bildpunkt zusammengefaßt werden, wobei die effektiven Bildpunkte für die Farbartsignale größer als für das Leuchtdichtesignal sind, ermöglicht, daß die Leuchtdichte- und Farbkomponenten trotz unterschiedlicher Ortsauflösung etwa die gleiche Bandbreite aufweisen, wodurch eine gemeinsame Filterung und Analog/Digital-Wandlung möglich ist. Außerdem ist für die Komponenten nur eine Gradationsstufe erforderlich.

Als weitere Vorteile sind anzusehen, daß bei der erfindungsgemäßen Farbfernsehkamera ein monochromer Halbeiterbildsensor verwendet werden kann, daß bei stehenden Bildern keine Deckungsfehler auftreten und daß kein Farbnebensprechen entsteht. Außerdem ist es bei der erfindungsgemäßen Farbfernsehkamera vorteilhaft, daß die Anpassung der örtlichen Auflösung für die Leuchtdichteinformation und die Farbinformation bereits im Sensor erfolgt und daß die für die schmalbandige Übertragung erforderliche geringere zeitliche Auflösung ebenfalls bereits im Sensor berücksichtigt wird.

Für die erfindungsgemäße Farbfernsehkamera eignen sich Halbleiterbildsensoren sowohl in sogenannter Frame-transfer-Technik (FT-CCD) als auch in Interline-Technik (IT-CCD).

Durch die in den Unteransprüchen aufgeführten Maßnahmen sind vorteilhafte Weiterbildungen und Verbesserungen der im Hauptanspruch angegebenen Erfindung möglich.

Ein Ausführungsbeispiel der Erfindung ist in der Zeichnung anhand mehrerer Figuren dargestellt und in der nachfolgenden Beschreibung näher erläutert. Es zeigt:
- Fig. 1: eine schematische Darstellung des Ausführungsbeispiels,
- Fig. 2: eine Ansicht des Filterrades,
- Fig. 3: eine Darstellung des zeitlichen Ablaufs der Signalerzeugung im Halbleiterbildsensor,
- Fig. 4: eine schematische Darstellung des Halbleiterbildsensors,
- Fig. 5: einen Teil der Darstellung nach Fig. 4 während des Auslesens des Leuchtdichtesignals und
- Fig. 6: den gleichen Teil der Darstellung nach Fig. 4 während des Auslesens eines Farbwertsignals.

Gleiche Teile sind in den Figuren mit gleichen Bezugszeichen versehen.

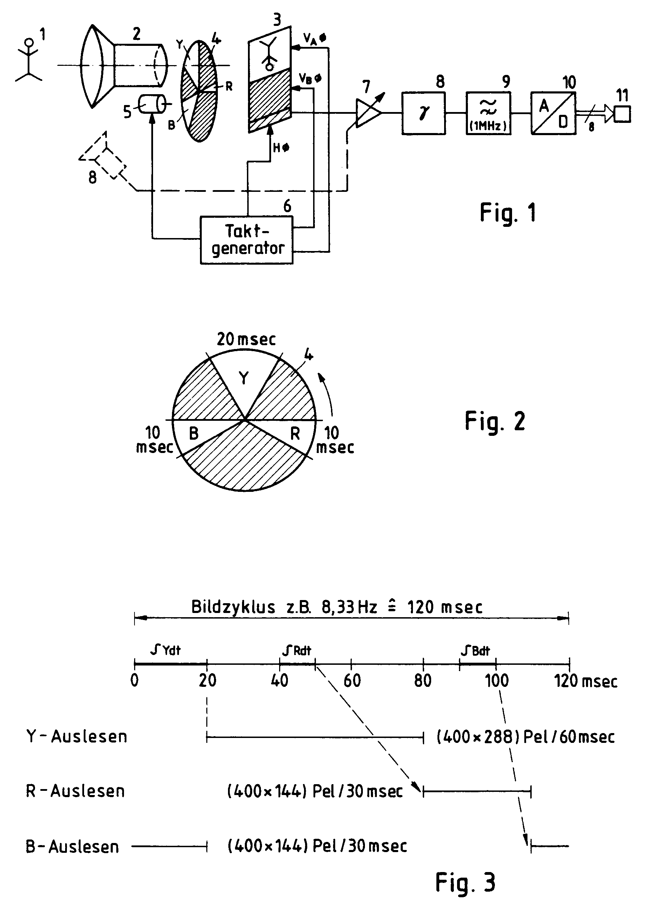

Bei dem Ausführungsbeispiel nach Fig. 1 wird ein Objekt 1 mit Hilfe eines Objektivs 2 auf die lichtempfindliche Fläche eines Halbleiterbildsensors 3 abgebildet. Im Strahlengang zwischen dem Objektiv 2 und dem Halbleiterbildsensor 3 befindet sich ein Filterrad 4, das von einem Motor 5 in Pfeilrichtung gedreht wird. Mit Hilfe von an sich bekannten Mitteln, die im einzelnen nicht dargestellt sind, wird das Filterrad 4 bezüglich der Drehzahl und der Phasenlage starr mit einem Takt verkoppelt, der neben den zum Betrieb des Halbleiterbildsensors 3 erforderlichen Taktsignalen HPHI, VAPHI und VBPHI in einem Taktgenerator 6 erzeugt wird.

Das vom Halbleiterbildsensor 3 erzeugte Signal enthält zeitsequentiell ein Leuchtdichtesignal Y und die Farbwertsignale R und B. Dieses Signal wird in einem Verstärker 7 verstärkt, wobei der Verstärkungsfaktor zur Anpassung an wechselnde Lichtverhältnisse steuerbar ist. So kann beispielsweise der Verstärkungsfaktor von einem Signal eines Weißsensors 8 gesteuert werden.

An den Verstärker 7 schließt sich eine Schaltung 9 zur Gradationsvorverzerrung, ein Tiefpaß 10 und ein Analog/Digital-Wandler 11 an. Der Tiefpaß 10 ist in an sich bekannter Weise zur Vermeidung von Alias-Störungen bei der Analog/Digital-Wandlung erforderlich. Da die drei Signale Y, R und B als Multiplexsignal vorliegen, ist im Gegensatz zu einer dreikanaligen Farbfernsehkamera jede der Schaltungen 7, 9, 10 und 11 nur einmal erforderlich. Das digitale Signal kann einem Ausgang 12 des Analog/Digital-Wandlers 11 entnommen, weiter verarbeitet und - und im Falle der schmalbandigen Bildübertragung nach entsprechender Bandbreitenreduzierung - übertragen werden.

Bei dem in Fig. 2 dargestellten Filterrad sind die lichtundurchlässigen Sektoren schraffiert. Zur Erzielung einer gewissen Verträglichkeit mit der bestehenden Fernsehnorm wird bei dem bevorzugten Ausführungsbeispiel das Filterrad mit einer Drehzahl von 8 1/3 s⁻¹ angetrieben. Damit ergibt sich eine Zykluszeit für die Aufnahme der drei Komponenten Y, R und B eines Bildes von 120 ms. Diese Zeit entspricht der Dauer von sechs Halbbildern beim Rundfunkfernsehen entsprechend der europäischen Norm. Eine entsprechende Anpassung an die in den USA und Japan gültige Norm mit 60 Halbbildern pro Sekunde ergibt eine Umdrehungszahl von 10 s⁻¹.

Bei dem dargestellten Ausführungsbeispiel ist der für das Leuchtdichtesignal Y vorgesehene Sektor 1/6 des Vollkreises, so daß sich eine Belichtungszeit von 20 ms ergibt. Die für die Farbwertsignale R und B vorgesehenen Sektoren sind halb so groß, was einer Belichtungszeit von 10 ms entspricht. Dieser Unterschied hat seinen Grund darin, daß bei den Farbwertsignalen größere Flächen des Halbleiterbildsensors zur Erzeugung jeweils eines Abtastwertes des Signals beitragen als bei dem Leuchtdichtesignal, was jedoch nicht dazu führen soll, daß die Farbwertsignale mit stark abweichenden Amplituden als das Leuchtdichtesignal erzeugt werden.

Fig. 3 stellt die zeitliche Abfolge dar, nach welcher die Belichtung des Halbleiterbildsensors und das Auslesen der Signale bei Verwendung des Filterrades nach Fig. 2 erfolgen. Es sind jedoch auch andere Zeiteinteilungen möglich. So können beispielsweise die Sektoren für Rot und Blau sehr dicht an den Sektor für die Leuchtdichte herangerückt werden, was zu einer Verminderung von dynamischen Deckungsfehlern beiträgt.

Während der ersten 20 ms wird der Halbleiterbildsensor durch den für das Leuchtdichtesignal Y vorgesehenen Sektor belichtet, was zu einer entsprechenden Integration von Ladungen in den einzelnen Bildpunkten des Halbleiterbildsensors führt. Nach Ablauf dieser Belichtungszeit werden diesen Ladungen entsprechende Signale in einen Zwischenspeicher geschrieben und während der folgenden 60 ms aus dem Zwischenspeicher ausgelesen. Dabei wird für das Einschreiben in den Zwischenspeicher lediglich etwa 1 ms benötigt.

Während der Zeit von 20 ms bis 40 ms wird der Halbleiterbildsensor nicht und von 40 ms bis 50 ms mit dem roten Spektralanteil belichtet. Bei Beendigung dieser Belichtung ist jedoch der Zwischenspeicher noch nicht frei für das Farbwertsignal R. Mit dem Übertragen in den Zwischenspeicher wird daher bis zur Zeit t = 80 ms gewartet. Von diesem Zeitpunkt an wird das Farbwertsignal R innerhalb von 30 ms aus dem Zwischenspeicher ausgelesen. Die Zeit zum Auslesen des Farbwertsignals R beträgt nur die Hälfte der Zeit für das Leuchtdichtesignal Y, da lediglich die Hälfte der Bildpunkte in vertikaler Richtung auszulesen ist.

Bei der Zeit t = 70 ms beginnt die Belichtung mit dem blauen Spektralanteil, die bei t = 100 ms beendet wird. Sobald bei 90 ms das Auslesen des Farbwertsignals R beendet ist, wird das Farbwertsignal B in den Zwischenspeicher übertragen und innerhalb der folgenden 30 ms ausgelesen.

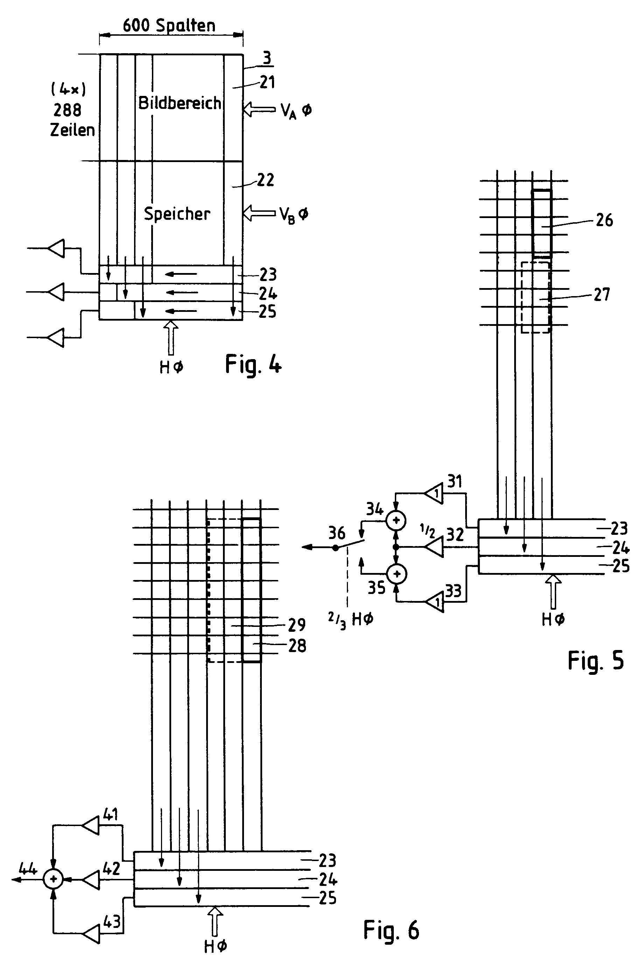

Fig. 4 zeigt einen Halbleiterbildsensor in sogenannter Frame-transfer-Technik. Diese Halbleiterbildsensoren weisen einen Bildbereich 21 und einen Speicherbereich 22 auf, der zur Zwischenspeicherung der im Bildbereich entstandenen Signale dient und deshalb im Rahmen dieser Patentanmeldung als Zwischenspeicher bezeichnet wird. Mit dem aufzunehmenden Bild wird der Bildbereich 21 belichtet, der aus spalten-und zeilenweise angeordneten Bildpunkten besteht. Bei einem bekannten Halbleiterbildsensor sind 288 Zeilen und 600 Spalten vorgesehen, wobei jeweils eine Zeile aus vier Phasen besteht, von denen jeweils zwei bei der Verwendung eines solchen Halbleiterbildsensors für Fernsehaufnahmen nach der Rundfunknorm für die Erzeugung je eines Halbbildes gemeinsam getaktet werden. Zur Erhöhung der aktiven Bildpunktfläche werden bei bekannten Farbfernsehkameras auch jeweils drei Phasen für eine Fernsehzeile verwendet. Dieses führt zu einer sogenannten Pseudo-Zwischenzeile, da halbbildweise abwechselnd die drei oberen und die drei unteren Phasen einer Vierer-Gruppe verwendet werden.

Unter anderem wird an den Bildbereich 21 ein Taktsignal VAPHI angelegt, was ein Übertragen des Ladungsbildes in den Zwischenspeicher 22 bewirkt. Aus dem Zwischenspeicher 22 wird mit Hilfe eines weiteren Taktsignals VBPHI der Inhalt derart in Ausgangsregister 23, 24, 25 eingeschrieben, daß jeweils die zu einer Fernsehzeile gehörenden Bildpunkte mit Hilfe eines Taktes HPHI aus Ausgangsregistern 23, 24, 25 ausgelesen werden können. Dazu wird jeweils der erste Bildpunkt einer Zeile in das Ausgangsregister 23, der zweite Bildpunkt in das Ausgangsregister 24, der dritte Bildpunkt in das Ausgangsregister 25 eingeschrieben, was sich in zyklischer Folge wiederholt.

Bei der Verwendung des in Fig. 4 dargestellten Halbleiterbildsensors zur Ableitung üblicher Fernsehsignale werden jeweils die Signale von zwei bzw. drei übereinanderliegenden Bildpunkten vom Zwischenspeicher 22 in das jeweilige Ausgangsregister 23, 24, 25 eingeschrieben, so daß sich für ein Vollbild 576 Fernsehzeilen ergeben.

Bei dem dargestellten Ausführungsbeispiel der erfindungsgemäßen Farbfernsehkamera werden jeweils die Signale von vier übereinanderliegenden Bildpunkten zur Erzeugung des Leuchtdichtesignals Y in die Ausgangsregister 23, 24, 25 eingeschrieben. Es wird also keine Zwischenzeile (Halbbild) mehr erzeugt. Dieses ist schematisch in Fig. 5 dargestellt. Dabei entspricht ein an sich als Bildpunkt im Halbleiterbildsensor vorgesehenes Element einem der Quadrate in Fig. 5. Durch eine entsprechende Taktung werden vier übereinanderliegende Bildpunkte 26 als ein Bildpunkt zusammengefaßt. Ferner werden Signale benachbarter Spalten derart zusammengefaßt, daß bei der Ableitung des Leuchtdichtesignals ein effektiver Bildpunkt 27 entsteht, dessen Fläche sechs mal so groß ist wie die Fläche eines ursprünglichen Bildpunktes des Halbleiterbildsensors. Um die Vergrößerung des effektiven Bildpunktes in horizontaler Richtung zu ermöglichen, werden die Ausgangssignale der Ausgangsregister 23, 24, 25 wie folgt miteinander kombiniert:

In den Verstärkern 31, 32, 33 werden die Ausgangssignale verstärkt, wobei das Ausgangssignal des Ausgangsregisters 24 lediglich halb so stark verstärkt wird wie die Ausgangssignale der anderen Ausgangsregister 23, 25. Danach folgt eine Addition in Addierschaltungen 34, 35, deren Ausgangssignale einem Multiplexer bzw. Umschalter 36 zugeführt werden. Der Multiplexer 36 wird mit einem Takt 2/3HPHI betätigt, so daß Abtastwerte entstehen, welche jeweils aus vier Bildpunkten einer ungeradzahligen Spalte und - mit halber Amplitude bewertet - den Bildpunkten einer benachbarten geradzahligen Spalte bestehen.

Die Ableitung der Farbwertsignale R, B ist in Fig. 6 dargestellt. Dazu wird der Takt VAPHI derart ausgelegt, daß jeweils acht in vertikaler Richtung benachbarte Bildpunkte gemeinsam in die Ausgangsregister 23, 24, 25 eingeschrieben werden. Der somit entstandene Bildpunkt 28 für das Farbwertsignal wird durch Zusammenfassung von jeweils drei Spalten zu einem effektiven Bildpunkt 29 vergrößert. Dieses erfolgt durch eine Addition der Ausgangssignale der Ausgangsregister 23, 24, 25. Dazu werden die Ausgangssignale über je einen Verstärker 41, 42, 43 einer Addierschaltung 44 zugeführt. Die Darstellungen in Fig. 5 und Fig. 6 sind auch bezüglich der Verstärker und Addierschaltungen stark schematisiert. Selbstverständlich ist es im Rahmen des Fachmännischen möglich, die Verstärker (im Falle des Verstärkers 32 bzw. 42 mit umschaltbarer Verstärkung) und Addierschaltungen gemeinsam für beide Signalableitungen vorzusehen.

Das Filterrad 4 kann im Rahmen der Erfindung auch anders ausgelegt sein. So können beispielsweise die Sektoren für das Leuchtdichtesignal Y angeordnet sein, was eine Verringerung der bei bewegten Bildern auftretenden dynamischen Deckungsfehler bewirkt.

Die erfindungsgemäße Farbfernsehkamera kann ohne Änderung der Takte H und V auch Bildsignale aus Y, R, B oder R, G, B liefern, die eine hohe, beispielsweise der Fernsehnorm entsprechende Auflösung haben. Es ist dazu lediglich eine Änderung der Takte für den Halbleiterbildsensor und der anschließenden Tiefpaßfilterung notwendig. Eine solche Kamera kann in vorteilhafter Weise für die Aufnahme von farbigen Dokumenten verwendet werden, da bei ihr keine statischen Deckungsfehler auftreten.

## Patentansprüche

1. Farbfernsehkamera, insbesondere für Bildtelefonanwendungen, mit einem Halbleiterbildsensor (3) und einem Filterrad (4) mit drei Sektoren im Strahlengang des Halbleiterbildsensors (3),
dadurch gekennzeichnet,
daß das Filterrad (4) einen breitbandig lichtdurchlässigen Sektor (Y), je einen Sektor mit bevorzugter Durchlässigkeit im roten (R) und blauen (B) Spektralbereich und dazwischen lichtundurchlässige Sektoren aufweist und im Halbleiterbildsensor eine Vielzahl von Bildpunkten zeilen- und spaltenweise angeordnet sind.

2. Farbfernsehkamera nach Anspruch 1,
dadurch gekennzeichnet,
daß Mittel zum Aus lesen der im Halbleiterbildsensor erzeugten Signale derart vorgesehen sind, daß jeweils mehrere Bildpunkte zu einem effektiven Bildpunkt zusammengefaßt werden und daß Abtastwerte, welche Farbwertsignale (R, B) bilden, aus Ladungen jeweils größerer effektiver Bildpunkte abgeleitet werden als die effektiven Bildpunkte, die zur Ableitung eines Leuchtdichtesignals (Y) herangezogen werden.

3. Farbfernsehkamera nach Anspruch 2,
dadurch gekennzeichnet,
daß zur Ableitung des Leuchtdichtesignals (Y) Bildpunkte aus vier Zeilen des Halbleiterbildsensors (3) zu einem effektiven Bildpunkt und zur Ableitung der Farbwertsignale (R, B) Bildpunkte aus acht Zeilen zu einem effektiven Bildpunkt zusammengefaßt werden.

4. Farbfernsehkamera nach Anspruch 3,
dadurch gekennzeichnet,
daß zur Ableitung je eines Abtastwertes des Leuchtdichtesignals (Y) die Ladungen von je vier Bildpunkten einer Spalte und die Hälfte der Ladungen von je vier Bildpunkten einer benachbarten Spalte zusammengefaßt werden und
daß zur Ableitung je eines Abtastwertes der Farbwertsignale die Ladungen von je acht Bildpunkten von drei benachbarten Spalten zusammengefaßt werden.

5. Farbfernsehkamera nach Anspruch 2,
dadurch gekennzeichnet,
daß ein Halbleiterbildsensor (3) mit 288 jeweils vierphasigen Zeilen und 600 Spalten vorgesehen ist, daß für das Leuchtdichtesignal 400 mal 288 effektive Bildpunkte (27) und für die Farbwertsignale 200 mal 144 effektive Bildpunkte (29) gebildet werden.

6. Farbfernsehkamera nach Anspruch 4,
dadurch gekennzeichnet,
daß der Halbleiterbildsensor (3) drei Ausgangsregister (23, 24, 25) aufweist, in welche die eine Fernsehzeile bildenden Signale aller Spalten von Spalte zu Spalte in zyklischer Folge vertauscht einschreibbar sind,
daß zur Bildung der Farbwertsignale die Ausgangssignale der drei Ausgangsregister addiert werden, daß zur Bildung des Leuchtdichtesignals das Ausgangssignal des ersten Ausgangsregisters (23) und das halbierte Ausgangssignal des zweiten Ausgangsregisters (24) einerseits sowie das halbierte Ausgangssignal des zweiten Ausgangsregisters (24) und das Ausgangssignal des dritten Ausgangsregisters (25) andererseits addiert werden und daß zwischen beiden Summensignalen mit einem Takt umgeschaltet wird, dessen Frequenz zwei Drittel der Frequenz des Auslesetakts beträgt.

7. Farbfernsehkamera nach Anspruch 1,
dadurch gekennzeichnet,
daß ein Halbleiterbildsensor (3) mit einem Zwischenspeicher (22) vorgesehen ist,
daß nach dem Belichten des Halbleiterbildsensors (3) in jeweils einem der Spektralbereiche die entsprechend der Belichtung entstandenen Signale der einzelnen Bildpunkte in den Zwischenspeicher übertragen werden und
daß danach die Signale aus dem Zwischenspeicher (22) ausgelesen werden und während des Auslesens der Halbleiterbildsensor (3) innerhalb eines weiteren Spektralbereichs belichtet wird.

8. Farbfernsehkamera nach Anspruch 1,
dadurch gekennzeichnet,
daß der lichtundurchlässige Sektor zwischen dem benachbarten farbdurchlässigen Sektoren (B, R) größer ist als die lichtundurchlässigen Sektoren zwischen dem breitbandig lichtdurchlässigem Sektor (Y) und dem benachbarten farbdurchlässigen Sektoren (B bzw. R).

9. Farbfernsehkamera nach Anspruch 8,
dadurch gekennzeichnet,
daß der erstgenannte lichtundurchlässige Sektor doppelt so groß ist wie die beiden anderen lichtundurchlässigen Sektoren.

10. Farbfernsehkamera nach Anspruch 9,
dadurch gekennzeichnet,
daß der durch eine Umdrehung des Filterrades (4) gegebene Zyklus wie folgt aufgeteilt ist: 1/6 breitbandige Belichtung, 1/6 keine Belichtung, 1/12 Belichtung im roten Spektralbereich, 2/6 keine Belichtung, 1/12 Belichtung im blauen Spektralbereich, 1/6 keine Belichtung.

11. Farbfernsehkamera nach einem der vorhergehenden Ansprüche,
dadurch gekennzeichnet,
daß das Filterrad (4) mit 8 1/3 Umdrehungen pro Sekunde gedreht wird.

12. Farbfernsehkamera nach einem der vorhergehenden Ansprüche,
dadurch gekennzeichnet,
daß das Filterrad (4) mit 10 Umdrehungen pro Sekunde gedreht wird.

## Claims

1. Colour television camera, especially for video telephone applications, having a semiconductor image sensor (3) and a filter wheel (4) with three sectors in the beam path of the semiconductor image sensor (3), characterized in that the filter wheel (4) exhibits a sector (Y) of broadband light transmission, a respective sector with preferred transmission in the red (R) and blue (B) spectral region and, therebetween, optically opaque sectors, and a plurality of pixels are disposed in lines and columns in the semiconductor image sensor.

2. Colour television camera according to Claim 1, characterized in that means are provided for the readout of the signals generated in the semiconductor image sensor in such a manner that in each instance a plurality of pixels are combined into one effective pixel and that sample values which form chrominance signals (R, B) are derived from charges of in each instance larger effective pixels than the effective pixels which are utilized for the derivation of a luminance signal (Y).

3. Colour television camera according to Claim 2, characterized in that for the derivation of the luminance signal (Y) pixels from four lines of the semiconductor image sensor (3) are combined into an effective pixel and for the derivation of the chrominance signals (R, B) pixels from 8 lines are combined into one effective pixel.

4. Colour television camera according to Claim 3, characterized in that for the derivation of each respective sample value of the luminance signal (Y) the charges of in each instance four pixels of one column and half of the charges of in each instance four pixels of an adjacent column are combined, and in that for the derivation of each respective sample value of the chrominance signals the charges of in each instance eight pixels of three adjacent columns are combined.

5. Colour television camera according to Claim 2, characterized in that a semiconductor image sensor (3) with 288 in each instance four-phase lines and 600 columns is provided, in that for the luminance signal 400 times 288 effective pixels (27) and for the chrominance signals 200 times 144 effective pixels (29) are formed.

6. Colour television camera according to Claim 4, characterized in that the semiconductor image sensor (3) exhibits three output registers (23, 24, 25) into which the signals, forming one television line, of all columns can be written in, transposed from column to column in cyclic sequence, in that to form the chrominance signals the output signals of the three output registers are added, in that to form the luminance signal the output signal of the first output register (23) and the halved output signal of the second output register (24) on the one hand and the halved output signal of the second output register (24) and the output signal of the third output register (25) on the other hand are added, and in that switching over takes place between the two sum signals using a clock, the frequency of which is two thirds of the frequency of the readout clock.

7. Colour television camera according to Claim 1, characterized in that a semiconductor image sensor (3) with an intermediate store (22) is provided, in that after the exposure of the semiconductor image sensor (3) to in each instance one of the spectral regions the signals, which have occurred corresponding to the exposure, of the individual pixels are transmitted into the intermediate store, and in that thereafter the signals are read out from the intermediate store (22) and, during the readout, the semiconductor image sensor (3) is exposed within a further spectral region.

8. Colour television camera according to Claim 1, characterized in that the optically opaque sector between the adjacent colour-transmitting sectors (B, R) is larger than the optically opaque sectors between the sector (Y) of broadband optical transmission and the adjacent colour-transmitting sectors (B and R respectively).

9. Colour television camera according to Claim 8, characterized in that the first mentioned optically opaque sector is twice as large as the two other optically opaque sectors.

10. Colour television camera according to Claim 9, characterized in that the cycle given by a rotation of the filter wheel (4) is split up as follows: 1/6 broadband exposure, 1/6 no exposure, 1/12 exposure in the red spectral region, 2/6 no exposure, 1/12 exposure in the blue spectral region, 1/6 no exposure.

11. Colour television camera according to one of the preceding claims, characterized in that the filter wheel (4) is rotated at 8 1/3 rotations per second.

12. Colour television camera according to one of the preceding claims, characterized in that the filter wheel (4) is rotated at 10 rotations per second.

## Revendications

1. Caméra vidéo couleur, notamment pour des applications de téléphones à images avec un capteur d'images à semi-conducteurs (3) et un disque de filtre (4) à trois secteurs dans le chemin du faisceau du capteur d'images à semi-conducteurs (3), caméra caractérisé en ce que le disque de filtre (4) comporte un secteur Y transparent, à bande large, chaque fois un secteur de transparence préférentiel dans le spectre rouge (R) et bleu (B), et des secteurs opaques entre eux, et le capteur d'images à semi-conducteurs, comporte un grand nombre de points répartis en lignes et en colonnes.

2. Caméra vidéo couleur selon la revendication 1, caractérisée par des moyens pour lire les signaux générés dans le capteur d'images à semiconducteurs de façon que chaque fois plusieurs points image soient réunis en un point image effectif, et que les valeurs de détection formant les signaux de chrominance (R, B) soient obtenues à partir des charges de points image effectifs chaque fois plus grands que les points image effectifs utilisés pour former un signal de luminance (Y).

3. Caméra vidéo couleur selon la revendication 2, caractérisée en ce que pour obtenir le signal de luminance (Y) on réunit en un point image effectif les points image de quatre lignes du capteur d'images à semi-conducteurs (3), et, pour dériver les signaux de chrominance (R, B), on réunit en un point image effectif les points image de huit lignes.

4. Caméra vidéo couleur selon la revendication 3, caractérisée en ce que pour obtenir chaque fois une valeur de détection du signal de luminance (Y), on réunit les charges de chaque fois quatre points image d'une colonne et la moitié des charges de chaque fois quatre points image d'une colonne voisine, et pour dériver chaque fois une valeur de détection des signaux de chrominance, on réunit les charges de chaque fois huit points image de trois colonnes voisines.

5. Caméra vidéo couleur selon la revendication 2, caractérisée par un capteur d'images à semi-conducteurs (3) avec chaque fois 288 lignes quadriphasées et 600 colonnes, et en ce que, pour le signal de densité de luminance on utilise 400 fois 288 points image effectifs (27) et, pour les signaux de chrominance, on forme des points image (29) effectifs de 200 fois 144.

6. Caméra vidéo couleur selon la revendication 4, caractérisée en ce que le capteur d'images à semi-conducteurs (3) comporte trois registres de sortie (23, 24, 25) dans lesquels s'enregistrent les signaux formant une ligne de télévision, toutes les colonnes pouvant être inscrites de manière échangée suivant un ordre cyclique, de colonne en colonne, et pour former les signaux de chrominance on additionne les signaux de sortie des trois registres de sortie, pour former le signal de luminance on additionne le signal de sortie du premier registre de sortie (23) et la moitié du signal de sortie du second registre de sortie (24) ainsi que la moitié du signal de sortie du second registre à décalage (24) et, par ailleurs, le signal de sortie du troisième registre de sortie (25), et en ce qu'entre les deux signaux de somme on commute à une cadence telle que sa fréquence corresponde à 2/3 de la fréquence de la cadence de lecture.

7. Caméra vidéo couleur selon la revendication 1, caractérisée par un capteur d'images à semi-conducteurs (3) avec une mémoire intermédiaire (22), et en ce que, après l'éclairement du capteur d'images à semi-conducteurs (3) dans chacune des plages spectrales on transfère les signaux d'éclairement obtenus des différents points image dans la mémoire intermédiaire, puis on lit les signaux de la mémoire intermediaire (22) et, pendant la lecture du capteur d'images à semi-conducteurs (3), on expose à l'intérieur d'une seconde plage spectrale.

8. Caméra vidéo couleur selon la revendication 1, caractérisée en ce que le secteur opaque compris entre les secteurs (B, R) transparents à la couleur voisins, est plus grand que les secteurs opaques compris entre le secteur (Y) à bande large, transparent à la lumière, et les secteurs voisins transparents à la couleur (B, R).

9. Caméra vidéo couleur selon la revendication 8, caractérisée en ce que le premier secteur opaque est double des deux autres secteurs transparents à la lumière.

10. Caméra vidéo couleur selon la revendication 9, caractérisée en ce que le cycle résultant de la rotation du disque de filtre (4) est subdivisé de la manière suivante : 1/6 : éclairement en bande large, 1/6 pas d'éclairement, 1/12 : éclairement dans la plage spectrale rouge, 2/6 : pas d'éclairement, 1/12 : éclairement de la plage spectrale bleue, 1/6 : pas d'éclairement.

11. Caméra vidéo couleur selon l'une des revendications précédentes, caractérisée en ce que le disque de filtre (4) est entraîné en rotation à une vitesse de 8 1/3 tours par seconde.

12. Caméra vidéo couleur selon l'une des revendications précédentes, caractérisée en ce que le disque de filtre (4) tourne à 10 tours par seconde.
